# EUROPEAN PATENT SPECIFICATION

(11) **EP 2 608 499 B1**
(45) Date of publication and mention of the grant of the patent: **30.12.2015**
(21) Application number: 11850483.6
(22) Date of filing: 17.03.2011
(51) Int. Cl.: G06F 3/023, H04M 1/725

(54) **METHOD AND DEVICE FOR REALIZING SHORTCUT MODE IN MOBILE TERMINAL**
VERFAHREN UND VORRICHTUNG ZUR REALISIERUNG EINES SHORTCUT-MODUS IN EINEM MOBILEN ENDGERÄT
PROCÉDÉ ET DISPOSITIF DE MISE EN OEUVRE DE MODE RACCOURCI DANS UN TERMINAL MOBILE

(30) Priority: 22.12.2010 CN 201010600688
(43) Date of publication of application: 26.06.2013
(73) Proprietor: ZTE Corporation, Shenzhen, Guangdong 518057 (CN)
(72) Inventor: QI, Zhiqiang, Shenzhen Guangdong 518057 (CN)
(74) Representative: Ilgart, Jean-Christophe
(86) International application number: PCT/CN2011/071901
(87) International publication number: WO 2012/083614

(56) References cited:
- WO-A1-00/08548
- CN-A- 101 404 682
- CN-A- 101 605 400
- DE-A1- 10 332 575
- US-A- 6 018 335
- US-A1- 2009 144 621
- US-A1- 2009 311 991

## Description

### TECHNICAL FIELD

The present disclosure relates to the field of communication technology, and in particular to a method and a device for realizing a shortcut in a mobile terminal.

### BACKGROUND

As mobile terminal is popularly used serving as a communication terminal, the function of the mobile terminal becomes increasingly powerful. However, the complexity of operation is increasing too. Presently, the operation is simplified generally by enabling a fixed function through "shortcut key", "push-to-talk" or a certain key.

DE 10332575 A1 (LOGITECH EUROP SA [CH] 26 February 2004) discloses a selection configuration system for use in a computer system, whereby a key on a peripheral such as a keyboard or mouse has a function assigned to it. WO 0008548 A1 (KONINKL PHILIPS ELECTRONICS NV [NL] 17 February 2000) relates to a handheld remote control device for control of electronic equipment, which has a program mode that enables the user to create macros. And CN 101605400 A (BYO CO., LTO. 16 December 2009) provides a method for generating a function shortcut menu, belonging to the field of mobile terminals and comprising the following steps: receiving a function shortcut menu generation command input by a user; and recording user keying operation information; storing the recorded user keying operation information and generating the function shortcut menu.

However, no matter what method is adopted, on one hand, only several preset shortcuts provided by the terminal can be selected and a user can not edit a new shortcut; on the other hand, a certain key can only correspond to one shortcut operation and can not be reused. In this way, the number of shortcuts set by the user is limited by the number of keys of the mobile terminal.

### SUMMARY

The main purpose of the disclosure is to provide a method and a device for realizing a shortcut in a mobile terminal, so that a user is not limited by the preset mode when selecting a shortcut, the user can edit a new shortcut and the number of shortcuts is not limited by the number of keys of the mobile terminal.

The present disclosure provides a method for customizing a shortcut in a mobile terminal, which includes the following steps:
providing an operation interface for a user to select to enter a customized shortcut setting process;
capturing each key pressing operation of the user and the time consumed by each key pressing operation in the process when the user enters the customized shortcut setting process;
recording and saving the key name and the corresponding operation time through a file with a unique path;
when the user clicks the file name of the shortcut, generating a key message according to the order of the key pressing operations and the corresponding operation time and completing the key pressing process automatically;
wherein the step of capturing each key pressing operation of the user and the time consumed by each key pressing operation in the process when the user enters the customized shortcut setting process may include:
   throughout the customized shortcut setting process, when a communication service occurs to the mobile terminal, filtering the key pressing operation for the communication service.

Preferably, the step of recording and saving the key name and the corresponding operation time through a file with a unique path may includes:
after the recording is completed, adding, to the end of the record file, a file protection identifier and extending information for extending shortcut functions.

Preferably, before displaying a shortcut icon on the mobile terminal interface, the method may include:
deleting repeated or redundant key pressing operations in the customized shortcut setting process, so as to optimize the key pressing sequence.

Preferably, before displaying a shortcut icon on the mobile terminal interface, the method further may include:
determining whether the shortcut has enabled an optimization option; if so, optimizing the order of key pressing in the record file; otherwise, directly transmitting record file completed information, wherein the transmitted information includes the name of the record file.

The disclosure provides a device for customizing a shortcut in a mobile terminal, which includes:
a man-machine interaction module configured to provide an operation interface for a user to select to enter a customizing shortcut setting process;
a filtering module configured to capture, when the user enters the customizing shortcut setting process, each key pressing operation of the user and the time consumed by each key pressing operation in the process;
a recoding module configured to record and save the key name and the corresponding operation time through a file with a unique path;
a replay module configured to generate, when the user clicks the file name of the shortcut, a key message according to the order of the key pressing operations and the corresponding operation time and to complete the key pressing process automatically;
wherein the filtering module may be further configured to:
   throughout the customized shortcut setting process, when a communication service occurs to the mobile terminal, filter the key pressing operation for the communication service.

Preferably, the recoding module may be further configured to:
after the recording is completed, add, to the end of the record file, a file protection identifier and extending information for extending shortcut functions.

Preferably, the device may further include:
an optimization module configured to delete repeated or redundant key pressing operations in the customized shortcut setting process, so as to optimize the key pressing sequence.

Preferably, the optimization module may be further configured to:
determine whether the shortcut has enabled an optimization option; if so, optimize the order of key pressing in the record file; otherwise, directly transmit record file completed information, wherein the transmitted information includes the name of the record file.

The method or the device provided by the disclosure enables a user to define a shortcut in shortcut in a mobile terminal as needed by capturing and recording the key pressing operation process and the operation time in the mobile terminal, thereby improving the flexibility for setting the shortcut in the mobile terminal and enabling the operation of the mobile terminal more convenient and simple; moreover, the present disclosure does not need support of the operation system or other software, and is not limited to a certain type of mobile terminal; the present disclosure is applicable to any mobile terminal, with a wide application range and high compatibility.

### BRIEF DESCRIPTION OF THE DRAWINGS

Fig. 1 shows a flowchart of a method for realizing a shortcut in a mobile terminal according to the present disclosure;
Fig. 2 shows a structure diagram of a device for realizing a shortcut in a mobile terminal according to the present disclosure;
Fig. 3 shows a workflow chart of a device for realizing a shortcut in a mobile terminal according to the present disclosure;
Fig. 4 shows a processing flowchart of an embodiment for executing a shortcut according to the present disclosure; and
Fig. 5 shows a diagram of an embodiment for interface conversion of a mobile terminal according to the present disclosure.

### DETAILED DESCRIPTION

It should be appreciated that the specific embodiments described hereinafter are only used to explain the present disclosure instead of limiting the present disclosure.

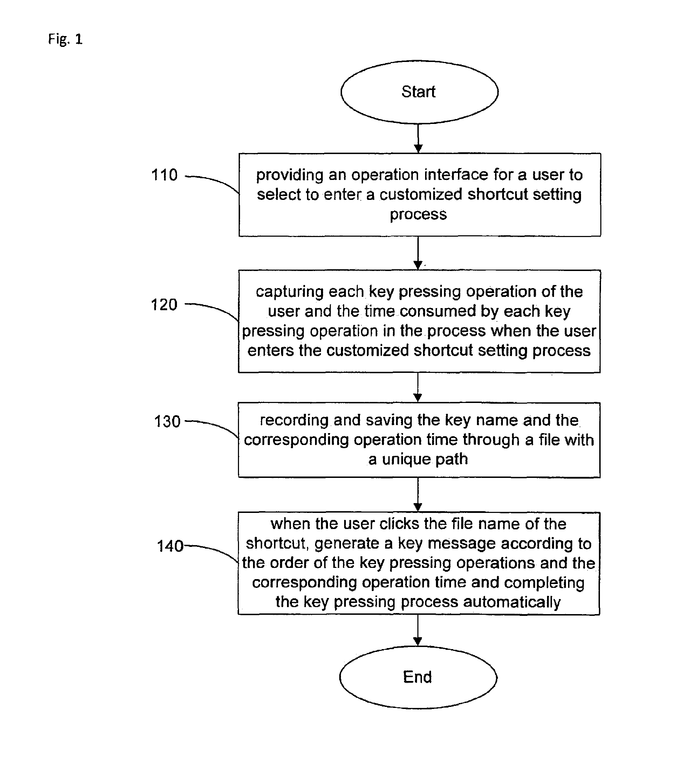

Fig. 1 illustrates a process for customizing a shortcut in a mobile terminal in an implementation according to the present disclosure. As shown in Fig. 1, the process includes the following steps:
Step 110: provide an operation interface for a user to select to enter a customized shortcut setting process. For example, in one embodiment, an icon for a customized shortcut may be preset, which is displayed on the user operation interface; when the user clicks the icon, the user enters the customized shortcut setting process and the operation interface jumps to an initial user interface for the user to perform setting.
Step 120: when the user enters the customized shortcut setting process, each key pressing operation of the user and the time consumed by each key pressing operation in the process are captured. For example, after entering the customized shortcut setting process, the name of the key pressed by the user each time, the time of pressing, and the interface jump time of the mobile terminal after the key is pressed are captured. If there are several key operations, the operations will be sorted in a chronological order.
Step 130: the key name and the corresponding operation time are recorded and saved through a file with a unique path. For example, the key name and the corresponding operation time are recorded through a program file with a unique file name, and when the user inputs a key for ending the customized shortcut setting process, the file recoding is ended. Meanwhile, the user is prompted to input a name of the shortcut, after the user inputs the name of the shortcut, the name of the shortcut and the name of the program file are associated and saved in the mobile terminal, so that the program file can execute an operation when the user clicks the name of the shortcut. There are several paths for saving; and the user can select one as needed, for example, the user can save the shortcut under the path of "shortcut setting" of the mobile terminal, or under other paths. If there are many shortcuts, a sorting format like an address list of a cell phone can be formed under the save path.
Step 140: when the user clicks a file name of a shortcut, a key message according to the order of the key operations and the corresponding operation time is generated and the key pressing procedure completes automatically.

According to the implementation of the present disclosure, a user can define a shortcut in a mobile terminal as needed by capturing and recording the key operation and the operation time, thereby improving the flexibility for setting the shortcut in the mobile terminal and enabling the operation of the mobile terminal more convenient and simple.

In one embodiment, the above step 120 includes: after the user enters the customized shortcut setting process, if a communication service occurs, the key operation for the communication service is filtered. For example, if a situation such as an incoming call or an incoming message or clock alarming occurs when performing a customized shortcut setting process, the key pressing for processing these events performed by the user is filtered out and the key pressing information during this period will not be outputted.

In one embodiment, step 130 includes: after the recording is completed, adding, to the end of the recorded file, a file protection identifier and extending information for extending shortcut functions. For example, if the power is suddenly down when recording the path of the shortcut, an unexpected record file might be generated in this situation, then a special identifier is generated on the last line of the record file for the purpose of the following continuation. Moreover, extending information also can be added for the purpose of extending functions of the shortcut in future.

In one embodiment, step 130 further includes: in the customized shortcut setting process, repeated or redundant key pressing operations may be deleted, so as to optimize the key pressing sequence. For example, in the customized shortcut setting process, if the user presses a key irrelevant to the target item, for example, keys such as Up, Down, Left and Right, these key pressing operations and the key pressing time are deleted so as to save program and to enable the replay to be more convenient.

The optimization operation above can be enabled or disabled through the user interface, for example, an icon can be set on the user interface so as to enable or disable the optimization operation. The optimization procedure may include: determing whether the shortcut has enabled an optimization option; if so, optimizing the key pressing sequence in the record file; otherwise, directly transmitting record file completed information, wherein the information transmitted includes the name of the record file.

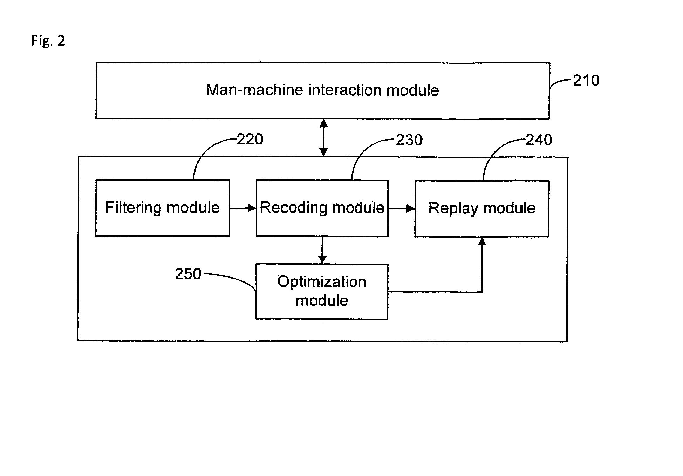

The present disclosure provides a device for customizing a shortcut in a mobile terminal, which can implement the method above. Referring to Fig. 2, the device includes:
a man-machine interaction module 210 configured to provide an operation interface for a user to select to enter a customized shortcut setting process. In one embodiment, the man-machine interaction module 210 can be a man-machine operation interface, and an icon for a customized shortcut may be preset, which is displayed on the man-machine operation interface; when the user clicks the icon, the user enters the customized shortcut setting process and the operation interface jumps to an initial user interface for the user to perform setting;
a filtering module 220 configured to capture, when the user enters the customized shortcut setting process, each key pressing operation of the user and the time consumed by each key pressing operation in the process. For example, after entering the customized shortcut setting process, the filtering module 220 can capture the name of the key pressed by the user each time, the time of pressing, and the interface jump time of the mobile terminal after the key is pressed, and then outputs parameters such as the key name and the corresponding time for operating the key. If there are several key operations, the operations will be sorted in a chronological order.
a recoding module 230 configured to record and save the key name and the corresponding operation time through a file with a unique path. For example, the recoding module 230 can record the key name and the corresponding operation time through a program file with a unique file name, and when the user inputs a key for ending the customized shortcut setting process, the file recording is ended. Meanwhile, the user is prompted to input a name of the shortcut, after the user inputs the name of the shortcut, the name of the shortcut and the name of the program file are associated and saved in the mobile terminal, so that the program file can execute an operation when the user clicks the name of the shortcut. There are several paths for saving; and the user can select one as needed, for example, the user can save the shortcut under the path of "shortcut setting" of the mobile terminal, or under other paths. If there are many shortcuts, a sorting format like an address list of a cell phone can be formed under the save path;
a replay module 240 configured to generate, when the user clicks a file name of a shortcut, a key message according to the order of the key operations and the corresponding operation time and to finish the key pressing procedure automatically.

In one embodiment, the filtering module 220 is further configured to: after the user enters the customized shortcut setting process, if a communication service occurs, filter the key operation for the communication service. For example, if a situation such as an incoming call or an incoming message or clock alarming occurs when performing a customized shortcut setting process, the filtering module 220 ignores the key pressing for processing for these events performed by the user and does not output the key pressing information during this period.

In one embodiment, the recording module 230 is further configured to: after the recording is completed, add, to the end of the recorded file, a file protection identifier and extending information for extending shortcut functions. For example, if the power is suddenly down when recording the path of the shortcut, an unexpected record file might be generated in this situation, then the recording module 230 generates a special identifier on the last line of the record file for the purpose of the following continuation. Moreover, extending information also can be added for the purpose of extending functions of the shortcut in future.

In one embodiment, the device above may further include:
an optimization module 250 configured to delete repeated or redundant key pressing operations in the customized shortcut setting process, so as to optimize the key pressing sequence. For example, in the customized shortcut setting process, if the user presses a key irrelevant to the target item, for example, keys such as Up, Down, Left and Right, the optimization module 250 deletes these key operations and the key time so as to save program and to enable the replay to be more convenient.

In one embodiment, the optimization module 250 can be further configured to: determine whether the shortcut has enabled an optimization option; if so, optimize the key pressing sequence in the record file; otherwise, directly transmit record file completed information, wherein the information transmitted includes the name of the record file. For example, when the recoding module 230 transmits record file saving completed information to the optimization module 250, the optimization module 250 first determines whether the shortcut has enabled an optimization option, and if the optimization has not been enabled, then a record file optimization completed event is directly transmitted to the replay module 240, wherein the information transmitted includes the name of the record file; if the optimization has been enabled, the optimization module 250 optimizes the key pressing sequence in the record file according to a local optimization algorithm (for example, deleting redundant or repeated keys) and transmits a record file optimization completed event to the replay module 240 after the optimization is completed.

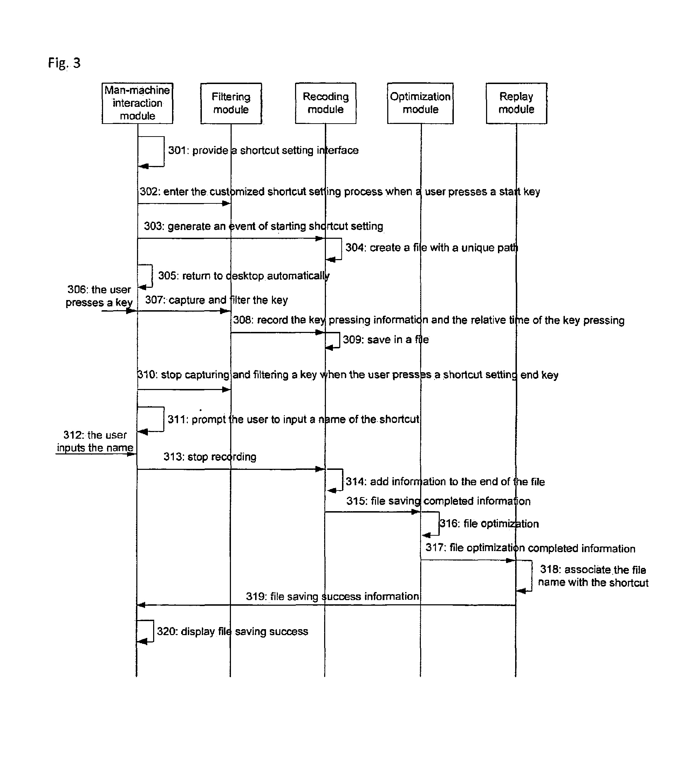

Fig. 3 illustrates a process for editing a shortcut by the above device according to the present disclosure, and the process includes the following steps:
Step 301: the man-machine interaction module 210 provides a shortcut setting interface;
Step 302: when a user presses a start key, the man-machine interaction module 210 enters the customized shortcut setting process;
Step 303: the man-machine interaction module 210 notifies the filtering module 220 that the man-machine interaction module 210 has entered the customized shortcut setting process;
Step 304: the man-machine interaction module 210 notifies the recoding module 230 that the man-machine interaction module 210 has entered the customized shortcut setting process;
Step 305: return to the man-machine interaction interface automatically;
Step 306: the user presses a key;
Step 307: the filtering module 220 captures and filters the key pressing;
Step 308: the recoding module 230 records the key pressing information and the relative time of the key pressing;
Step 309: the recording module 230 saves the key pressing information and the relative time of the key pressing in a file;
Step 310: when the user presses a shortcut setting end key, the filtering module 220 stops capturing and filtering the key pressing;
Step 311: the man-machine interaction module 210 prompts the user to input a name of the shortcut;
Step 312: the user inputs the name of the shortcut;
Step 313: the recoding module 230 stops recording;
Step 314: the recoding module 230 adds information to the end of the file;
Step 315: the recoding module 230 transmits file saving completed information;
Step 316: the optimization module 250 optimizes the file;
Step 317: the optimization module 250 transmits optimization completed information to the replay module 240;
Step 318: the replay module 240 associates the file name with the shortcut;
Step 319: the replay module 240 transmits file saving success information to the man-machine interaction module 210;
Step 320: the man-machine interaction module 210 displays file saving success information.

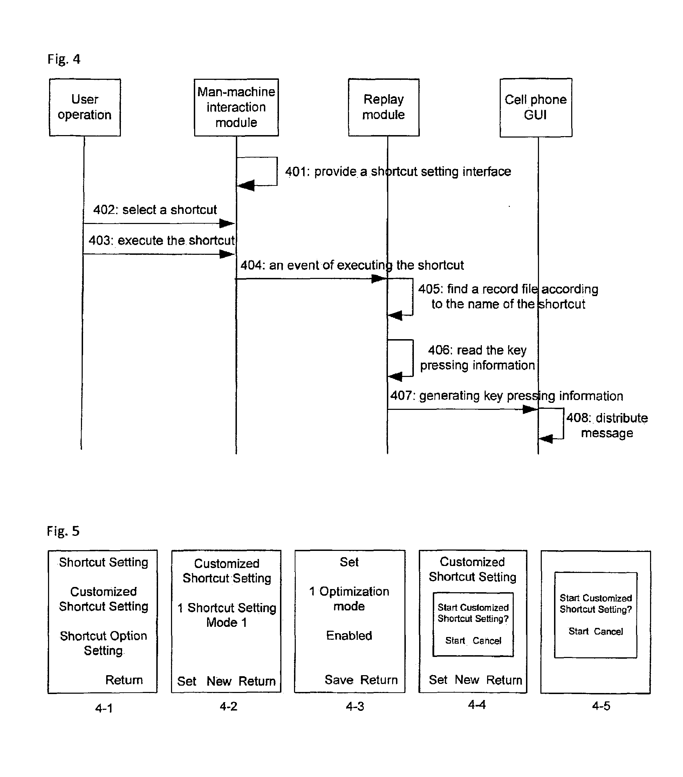

Fig. 4 illustrates a flowchart for executing a shortcut in an embodiment of the above device according to the present disclosure. The process includes the following steps:
Step 401: a user enters a shortcut setting interface.
Step 402: the user selects a certain shortcut.
Step 403: execute the shortcut.
Step 404: the man-machine interface module transmits an event of executing the shortcut to the replay module.
Step 405: the replay module finds the name of a record file according to the name information of the shortcut in the event.
Step 406: the replay module reads the key information in the file.
Step 407: according to the key pressing information and the relative time of the key pressing, the replay module generates key pressing information and transmits the information to a GUI system of the mobile terminal.
Step 408: the GUI system of the mobile terminal distributes the key pressing message.

Repeat Step 406 and Step 407 until all key sequences are completed.

Fig. 5 illustrates a diagram of interface conversion of a mobile terminal during a customized shortcut setting process in an embodiment of the above device according to the present disclosure.
1. First, a user selects a shortcut setting function. As shown in Fig. 4-1, the interface includes Customized Shortcut Setting, Shortcut Option Setting and Help. The Shortcut Option Setting module provides a function that the current mobile terminal sets a shortcut, that is, the mobile terminal provides several defined shortcut options, and the user selects to set a shortcut according to the option. When the Help icon is clicked, the steps for the shortcut setting can be illustrated.
2. In Fig. 4-1, Customized Shortcut Setting is selected.
3. Select Set in Fig. 4-2, then the interface is as shown in Fig. 4-3, the optimization mode can be enabled or disabled, when the optimization mode is enabled, the key pressing sequence in the record file will be optimized.
4. Select New in Fig. 4-2, then the interface is as shown in Fig. 4-4; select Start according to the prompt, then the interface automatically returns to the desktop and the shortcut setting is started; each key press of the user and the relative time of the key press are both recorded and sequentially saved in a file. During this procedure, an icon would appear in the title bar to prompt that the mobile terminal currently is in the customized shortcut setting process.
5. If the user intends to end the shortcut setting process, press a shortcut end key; then the interface is as shown in Fig. 4-5, and the user selects Finish Setting or Cancel Setting according to the prompt. The shortcut end key is a shortcut provided by the mobile terminal, and the user also can redefine a shortcut in the Shortcut Option Setting.
6. In Fig. 4-5, if Finish Setting is selected, prompt the user to input and save a name of the shortcut; if Cancel Setting is selected, directly delete the saved key record file. The icon prompt on the title bar disappears.

In future, when a user clicks the shortcut setting key and selects a certain shortcut, a series of operations will be completed.

The above are the preferred embodiments of the disclosure only and are not intended to limit the scope of the present disclosure. Any equivalent structures or equivalent flow modifications made according to the description and the accompanying drawings of the present disclosure, or any equivalent structures or equivalent flow modifications applied in other relevant technical fields directly or indirectly are deemed to be included in the scope of the present disclosure.

## Claims

1. A method for realizing a shortcut in a mobile terminal, comprising:
providing (110) an operation interface for a user to select to enter a customized shortcut setting process;
capturing (120) each key pressing operation of the user and the time consumed by each key pressing operation in the process when the user enters the customized shortcut setting process;
recording and saving (130) the key name and the corresponding operation time through a file with a unique path;
when the user clicks the file name of the shortcut, generating (140) a key message according to the order of the key pressing operations and the corresponding operation time and completing the key pressing process automatically;
**characterized in that**, the step of capturing (120) each key pressing operation of the user and the time consumed by each key pressing operation in the process when the user enters the customized shortcut setting process comprises:
throughout the customized shortcut setting process, when a communication service occurs to the mobile terminal, filtering out the key pressing operation for the communication service.

2. The method according to claim 1, wherein the step of recording and saving (130) the key name and the corresponding operation time through a file with a unique path comprises:
after the recording is completed, adding, to the end of the record file, a file protection identifier and extending information for extending shortcut functions.

3. The method according to any one of claims 1 to 2, wherein the step of recording and saving (130) the key name and the corresponding operation time through a file with a unique path further comprises:
deleting repeated or redundant key pressing operations in the customized shortcut setting process, so as to optimize the key pressing sequence.

4. The method according to claim 3, wherein during the execution of the customized shortcut setting process, before deleting the repeated or redundant key pressing operations, the method further comprises:
determining whether the shortcut has enabled an optimization option; if so, optimizing the order of key pressing in the record file; otherwise, directly transmitting record file completed information, wherein the transmitted information includes the name of the record file.

5. A device for customizing a shortcut in a mobile terminal, comprising:
a man-machine interaction module (210) configured to provide an operation interface for a user to select to enter a customized shortcut setting process;
a filtering module (220) configured to capture, when the user enters the customized shortcut setting process, each key pressing operation of the user and the time consumed by each key pressing operation in the process;
a recoding module (230) configured to record and save the key name and the corresponding operation time through a file with a unique path;
a replay module (240) configured to generate, when the user clicks the file name of the shortcut, a key message according to the order of the key pressing operations and the corresponding operation time and to complete the key pressing process automatically;
**characterized in that**, the filtering module (220) is further configured to:
throughout the customized shortcut setting process, when a communication service occurs to the mobile terminal, filter out the key pressing operation for the communication service.

6. The device according to claim 5, wherein the recoding module (230) is further configured to:
after the recording is completed, add, to the end of the record file, a file protection identifier and extending information for extending shortcut functions.

7. The device according to any one of claims 5 to 6, further comprising:
an optimization module (250) configured to delete repeated or redundant key pressing operations in the customized shortcut setting process, so as to optimize the key pressing sequence.

8. The device according to claim 7, wherein the optimization module (250) is further configured to:
determine whether the shortcut has enabled an optimization option; if so, optimize the order of key pressing in the record file; otherwise, directly transmit record file completed information, wherein the transmitted information includes the name of the record file.

## Patentansprüche

1. Verfahren zum Realisieren eines Shortcuts in einem mobilen Endgerät, umfassend:
Bereitstellen (110) einer Bedienungsschnittstelle für einen Bediener, um auszuwählen, in einen personalisierten Shortcut-Festlegungs-Prozess einzutreten;
Erfassen (120) jeder Schlüsseldruck-Bedienung des Bedieners und die durch jede Schlüsseldruck-Bedienung in dem Prozess verbrauchte Zeit, wenn der Bediener in den personalisierten Shortcut-Festlegungs-Prozess eintritt;
Aufzeichnen und Speichern (130) des Schlüssel-Namens und der entsprechenden Bedienungszeit durch eine Datei mit einem eindeutigen Pfad;
wenn der Bediener den Dateinamen des Shortcuts anklickt, ein Erzeugen (140) einer Schlüssel-Nachricht gemäß der Reihenfolge der Schlüsseldruck-Bedienungen und der entsprechenden Bedienungszeit und automatisches Vervollständigen des Schlüsseldruck-Prozesses;
**dadurch gekennzeichnet, dass** der Schritt des Erfassens (120) jeder Schlüsseldruck-Bedienung des Bedieners und der durch jede Schlüsseldruck-Bedienung in dem Prozess verbrauchten Zeit, wenn der Bediener in den personalisierten Shortcut-Festlegungs-Prozess eintritt, umfasst:
während des gesamten personalisierten Shortcut-Festlegungs-Prozesses, wenn ein Kommunikationsservice mit dem mobilen Endgerät auftritt, ein Herausfiltern der Schlüsseldruck-Bedienung für den Kommunikationsservice.

2. Verfahren nach Anspruch 1, wobei der Schritt des Aufzeichnens und Speicherns (130) des Schlüssel-Namens und der entsprechenden Bedienungszeit durch eine Datei mit einem eindeutigen Pfad umfasst:
nachdem das Aufzeichnen abgeschlossen ist, ein Hinzufügen einer Datei-Schutz-Kennung und von Erweiterungs-Informationen für Erweiterungs-Shortcut-Funktionen an das Ende der Aufzeichnungs-Datei.

3. Verfahren nach einem der Ansprüche 1 bis 2, wobei der Schritt des Aufzeichnens und Speicherns (130) des Schlüssel-Namens und der entsprechenden Bedienungszeit durch eine Datei mit einem eindeutigen Pfad ferner umfasst:
ein Löschen von wiederholten oder redundanten Schlüsseldruck-Bedienungen in dem personalisierten Shortcut-Festlegungs-Prozess, um die Schlüsseldruck-Sequenz zu optimieren.

4. Verfahren nach Anspruch 3, wobei während der Ausführung des personalisierten Shortcut-Festlegungs-Prozesses, vor dem Löschen der wiederholten oder redundanten Schlüsseldruck-Bedienungen, das Verfahren ferner umfasst:
ein Bestimmen, ob der Shortcut eine Optimierungsoption aktiviert hat; falls dem so ist, ein Optimieren der Reihenfolge eines Schlüssel-Drückens in der aufgezeichneten Datei; andernfalls, ein direktes Übertragen von Aufzeichnungs-Datei-Vervollständigt-Informationen, wobei die übertragenen Informationen den Namen der Aufzeichnungsdatei umfassen.

5. Vorrichtung zum Personalisieren eines Shortcuts in einem mobilen Endgerät, umfassend:
ein Mensch-Maschine-Interaktions-Modul (210), welches dazu eingerichtet ist, eine Bedienungsschnittstelle für einen Bediener bereitzustellen, um auszuwählen, in einen personalisierten Shortcut-Festlegungs-Prozess einzutreten;
ein Filtermodul (220), welches dazu eingerichtet ist, jede Schlüsseldruck-Bedienung des Bedieners und die durch jede Schlüsseldruck-Bedienung in dem Prozess verbrauchte Zeit zu erfassen, wenn der Bediener in den personalisierten Shortcut-Festlegungs-Prozess eintritt;
ein Aufzeichnungsmodul (230), welches dazu eingerichtet ist, den Schlüssel-Namen und die entsprechende Bedienungszeit durch eine Datei mit einem eindeutigen Pfad aufzuzeichnen und zu speichern;
ein Wiedergabemodul (240), welches dazu eingerichtet ist, eine Schlüssel-Nachricht gemäß der Reihenfolge der Schlüsseldruck-Bedienungen und der entsprechenden Bedienungszeit zu erzeugen, wenn der Bediener den Dateinamen des Shortcuts anklickt, und den Schlüsseldruck-Prozess automatisch zu vervollständigen;
**dadurch gekennzeichnet, dass** das Filtermodul (220) ferner dazu eingerichtet ist:
während des gesamten personalisierten Shortcut-Festlegungs-Prozesses, wenn ein Kommunikationsservice mit dem mobilen Endgerät auftritt, die Schlüsseldruck-Bedienung für den Kommunikationsservice herauszufiltern.

6. Vorrichtung nach Anspruch 5, wobei das Aufzeichnungsmodul (230) ferner dazu eingerichtet ist:
nachdem das Aufzeichnen vervollständigt ist, eine Datei-Schutz-Kennung und Erweiterungs-Informationen für Erweiterungs-Shortcut-Funktionen an das Ende der Aufzeichnungsdatei hinzuzufügen.

7. Vorrichtung nach einem der Ansprüche 5 bis 6, ferner umfassend:
ein Optimierungsmodul (250), welches dazu eingerichtet ist, wiederholte oder redundante Schlüsseldruck-Bedienungen in dem personalisierten Shortcut-Festlegungs-Prozess zu löschen, um die Schlüsseldruck-Sequenz zu optimieren.

8. Vorrichtung nach Anspruch 7, wobei das Optimierungsmodul (250) ferner dazu eingerichtet ist:
zu bestimmen, ob der Shortcut eine Optimierungsoption aktiviert hat; falls dem so ist, die Reihenfolge eines Schlüssel-Drückens in der Aufzeichnungsdatei zu optimieren; andernfalls Aufzeichnungs-Datei-vervollständigt-Informationen zu übertragen, wobei die übertragenen

## Revendications

1. Procédé pour réaliser un raccourci dans un terminal mobile, comprenant :
fournir (110) une interface d'opération à un utilisateur pour choisir d'entrer dans un processus d'établissement de raccourci personnalisé ;
capturer (120) chaque opération d'abaissement de touche de l'utilisateur et du temps consommé par chaque opération d'abaissement de touche dans le processus lorsque l'utilisateur entre dans le processus d'établissement de raccourci personnalisé ;
enregistrer et sauvegarder (130) le nom de touche et du temps d'opération correspondant à travers un fichier avec un chemin unique ;
lorsque l'utilisateur clique sur le nom de fichier du raccourci, la génération (140) d'un message de touche selon l'ordre des opérations d'abaissement de touche et le temps d'opération correspondant et l'achèvement du processus d'abaissement de touche automatiquement ;
**caractérisé en ce que**, l'étape de capture (120) de chaque opération d'abaissement de touche de l'utilisateur et du temps consommé par chaque opération d'abaissement de touche dans le processus lorsque l'utilisateur entre dans le processus d'établissement de raccourci personnalisé comprend :
tout au long du processus d'établissement de raccourci personnalisé, lorsqu'un service de communication se produit vers le terminal mobile, l'élimination par filtrage de l'opération d'abaissement de touche pour le service de communication.

2. Procédé selon la revendication 1, dans lequel l'étape d'enregistrement et de sauvegarde (130) du nom de touche et du temps d'opération correspondant à travers un fichier avec un chemin unique comprend :
après que l'enregistrement est achevé, l'ajout, à la fin du fichier d'enregistrement, d'un identificateur de protection de fichier et l'extension d'informations pour étendre des fonctions de raccourci.

3. Procédé selon l'une quelconque des revendications 1 à 2, dans lequel l'étape d'enregistrement et de sauvegarde (130) du nom de touche et du temps d'opération correspondant à travers un fichier avec un chemin unique comprend en outre :
la suppression d'opérations d'abaissement de touche répétées ou redondantes dans le processus d'établissement de raccourci personnalisé, de manière à optimiser la séquence d'abaissement de touche.

4. Procédé selon la revendication 3, dans lequel pendant l'exécution du processus d'établissement de raccourci personnalisé, avant de supprimer les opérations d'abaissement de touche répétées ou redondantes, le procédé comprend en outre :
la détermination de si le raccourci a permis une option d'optimisation ; si oui, l'optimisation de l'ordre d'abaissement de touche dans le fichier d'enregistrement ; autrement, la transmission directe d'informations de fichier d'enregistrement achevé, où les informations transmises comprennent le nom du fichier d'enregistrement.

5. Dispositif pour personnaliser un raccourci dans un terminal mobile, comprenant :
un module d'interaction homme-machine (210) configuré pour fournir une interface d'opération à un utilisateur pour choisir d'entrer dans un processus d'établissement de raccourci personnalisé ;
un module de filtrage (220) configuré pour capturer, lorsque l'utilisateur entre dans le processus d'établissement de raccourci personnalisé, chaque opération d'abaissement de touche de l'utilisateur et le temps consommé par chaque opération d'abaissement de touche dans le processus ;
un module d'enregistrement (230) configuré pour enregistrer et sauvegarder le nom de touche et le temps d'opération correspondant à travers un fichier avec un chemin unique ;
un module de relecture (240) configuré pour générer, lorsque l'utilisateur clique sur le nom de fichier du raccourci, un message de touche selon l'ordre des opérations d'abaissement de touche et le temps d'opération correspondant et pour achever le processus d'abaissement de touche automatiquement ;
**caractérisé en ce que**, le module de filtrage (220) est en outre configuré pour :
tout au long du processus d'établissement de raccourci personnalisé, lorsqu'un service de communication se produit vers le terminal mobile, éliminer par filtrage l'opération d'abaissement de touche pour le service de communication.

6. Dispositif selon la revendication 5, dans lequel le module d'enregistrement (230) est en outre configuré pour :
après que l'enregistrement est achevé, ajouter, à la fin du fichier d'enregistrement, un identificateur de protection de fichier et des informations d'extension pour étendre des fonctions de raccourci.

7. Dispositif selon l'une quelconque des revendications 5 à 6, comprenant en outre :
un module d'optimisation (250) configuré pour supprimer des opérations d'abaissement de touche répétées ou redondantes dans le processus d'établissement de raccourci personnalisé, de manière à optimiser la séquence d'abaissement de touche.

8. Dispositif selon la revendication 7, dans lequel le module d'optimisation (250) est en outre configuré pour :
déterminer si le raccourci a permis une option d'optimisation ; si oui, optimiser l'ordre d'abaissement de touche dans le fichier d'enregistrement ; autrement, transmettre directement des informations de fichier d'enregistrement achevé, où les informations transmises comprennent le nom du fichier d'enregistrement.
